# EUROPEAN PATENT APPLICATION

(11) **EP 1 462 748 A1**
(43) Date of publication of application: **29.09.2004**
(21) Application number: 04075788.2
(22) Date of filing: 11.03.2004
(51) Int. Cl.: F28D 1/02

(54) **Improved radiator**

(30) Priority: 24.03.2003 BE 200300182
(71) Applicant: Jaga, naamloze vennootschap, 3590 Diepenbeek (BE)
(72) Inventor: Kriekels, Jan Joseph, B-3590 Diepenbeek (BE)
(74) Representative: Donné, Eddy

(57) **Abstract**

Improved radiator of the type which consists of a heat exchanger (2) provided in an open housing (3) and which mainly consists of one or several pipes (7-8) onto which one or several series of lamellas (9) are provided at mutual distances (A) from each other, characterised in that the distance (A) between the lamellas (9) amounts to at least three millimetres, and in that at least one fan (15) is provided above the heat exchanger (2), which fan (15) draws in air through the heat exchanger (2).

## Description

The present invention concerns an improved radiator.

In particular, the invention concerns a radiator of the type which consists of a heat exchanger provided in an open housing and which mainly consists of one or several pipes which can be connected to a heating circuit and onto which are provided one or several series of lamellas at mutually equal distances.

With such a type of radiator, the heat is mainly spread by means of natural convection, whereby, in other words, a natural air flow is created thanks to the rising hot air in the room in which the radiator is erected.

A disadvantage of such known radiators is that heating a cold room still takes relatively long.

But then again, once the room has been heated, such radiators create a pleasant climate since, thanks to the natural convection, it will be evenly warm practically everywhere in the room, and moisture and fungous growth are excluded.

Radiators which are equipped with a fan blowing air through and/or over the heat exchanger are already known, which provides for a forced air circulation, so that the heat from the heat exchanger is spread faster in the room, as a result of which a cold room will be heated faster.

A disadvantage of such known radiators is that the presence of the fan has a negative influence on the natural convection of the radiator, so that the capacity of the radiators concerned is negatively influenced when the fan is switched off.

Hence, with such radiators, the fan will usually keep on working continuously, which has an additional disadvantage that this results in extra energy costs and extra noise and draught nuisance.

The present invention aims to provide a solution to the above-mentioned and other disadvantages, in that it provides for a radiator which is equipped with one or several fans which allow to heat a cold room much faster by raising the capacity and which, thanks to an innovative selection of the constructive characteristics and of the mutual erection of the components of the radiator, have no or practically no negative influence on the natural convection and thus on the heating capacity of the radiator, such that, once the room has been heated sufficiently, the fan or fans can be switched off or they can be driven at a lower rotational speed, after which, thanks to the unhindered natural convection of the radiator, a pleasant temperature climate can be maintained in the above-mentioned room, and moreover there will be no noise or draught nuisance of rotating fans.

To this end, the invention concerns an improved radiator of the above-mentioned type which consists of a heat exchanger provided in an open housing and which mainly consists of one or several pipes onto which one or several series of lamellas are provided at mutual distances from each other, whereby the distance between the lamellas amounts to at least three millimetres, and whereby at least one fan is provided above the heat exchanger, which fan draws in air through the heat exchanger.

In order to better explain the characteristics of the invention, the following preferred embodiment of an improved radiator according to the invention is described as an example only without being limitative in any way, with reference to the accompanying drawings, in which:
figure 1 schematically represents an improved radiator according to the invention, schematically and in perspective, whereby the housing has been partially omitted;
figure 2 represents a section according to line II-II in figure 1;
figure 3 represents the part indicated by F3 in figure 2 to a larger scale;

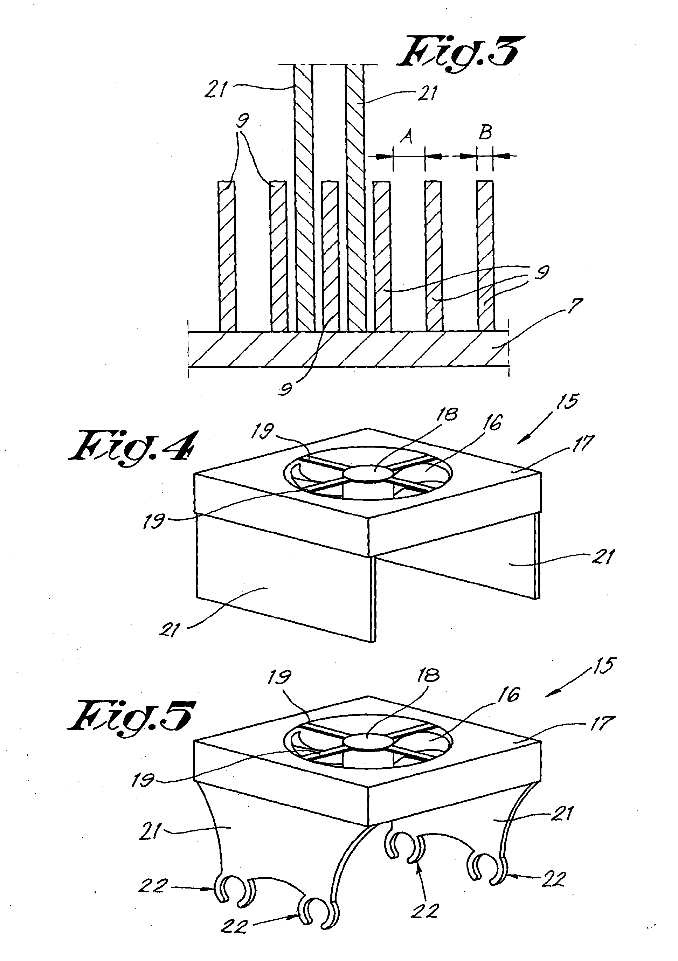

figure 4 represents the part indicated by F4 in figure 1 to a larger scale;
figure 5 represents a variant of figure 4.

The improved radiator 1 according to the invention mainly consists of a heat exchanger 2 placed in an open housing 3 which is provided with an opening 4 at the bottom and an opening 5 at the top which is either or not covered with a grid 6.

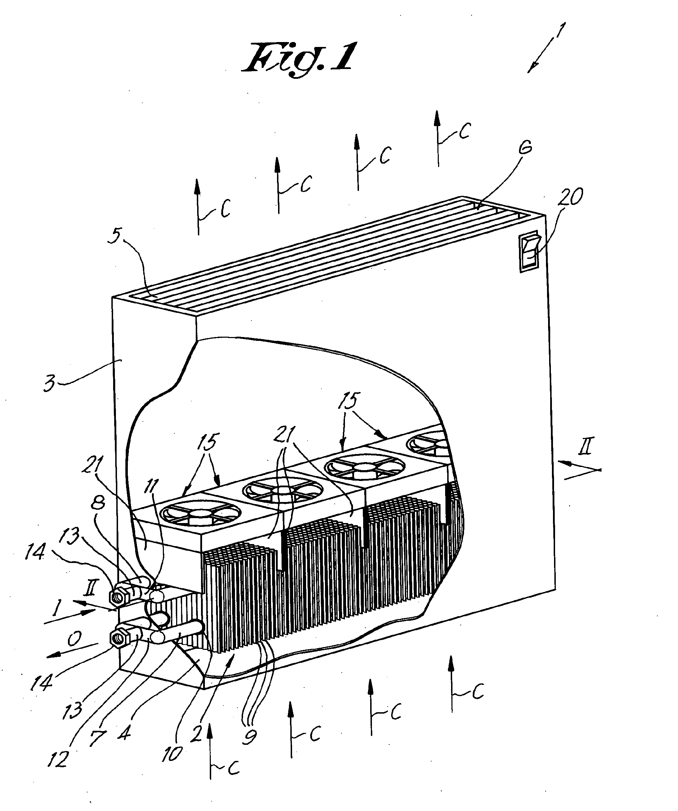

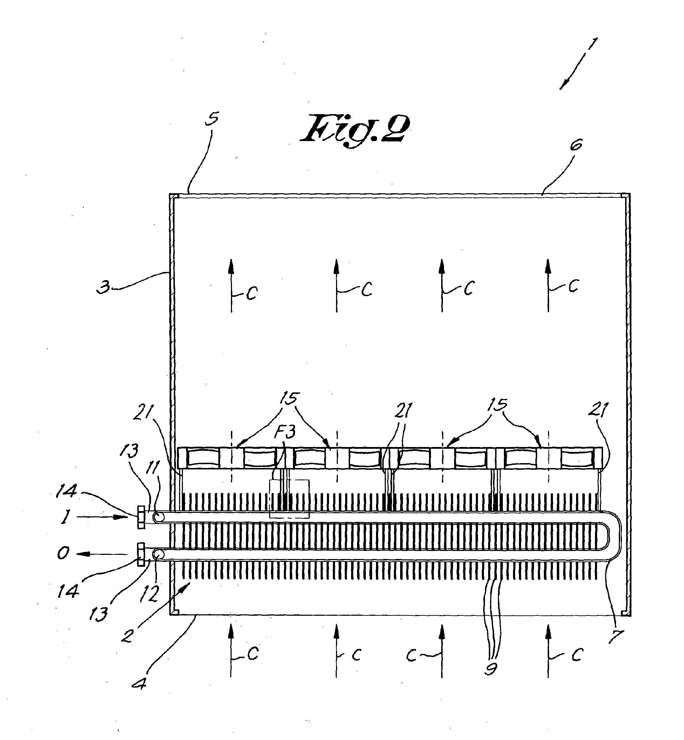

In the given example, the heat exchanger 2 of figures 1 and 2 is formed of two parallel, U-shaped bent pipes, 7 and 8 respectively, upon which are provided a series of lamellas at mutual distances A from each other, which lamellas 9 are fixed to the pipes 7-8, for example as they are clamped on the pipes 7-8 or are welded onto them.

According to the invention, the above-mentioned distance A between the lamellas 9 is larger than 3 millimetres, and the thickness B of these lamellas 9 is preferably included between 15 one hundredths of a millimetre and one millimetre.

The lamellas 9 preferably have a corrugated shape, as represented in figure 1, and they are made of a heat-conducting material, preferably copper, aluminium or steel.

The pipes 7-8 are made of a heat-conducting material as well, such as copper, aluminium or steel, whereby the material of the pipes 7-8 is not necessarily the same as that of the lamellas 9.

In the given example, the free ends of the pipes are for example connected in pairs, by means of an inlet collector 11 and by means of an outlet collector 12 respectively, which collectors 11-12 are provided with a connector 13 with for example a swivel 14 or the like for the connection to a supply pipe, a drain pipe respectively, of a heating circuit which is not represented in the figures.

Above the heat exchanger 2 is provided at least one fan 15 according to the invention or, as represented in the figures, as a function of the required dynamic capacity of the radiator 1, several fans 15 are provided in a modular manner next to each other, above the heat exchanger 2.

In this embodiment, the used fans 15 are of the axial type and they are each equipped with a screw 16 provided in a housing 17 on the driven shaft of a motor 18 which is fixed on the housing 17 by means of spokes 19 and which is connected to an electric circuit not represented in the figures via a switch 20.

The fans 15 are provided with supports 21 resting between the lamellas 9 on the above-mentioned pipes 7-8 of the heat exchanger 2, whereby a distance is preferably maintained between the fans 15 and the heat exchanger 2.

The width of the fans 15 can be smaller than, equal to or larger than the width of the heat exchanger 2, and the sense of rotation of the screw 16 is such that the fan 15 draws in air through the heat exchanger 2.

The working of the improved radiator 1 according to the invention is very simple and as follows.

The radiator 1 is erected in an appropriate manner in a space or room to be heated, for example by hanging it against a wall or by mounting it in a freestanding manner.

The radiator 1 is connected with its inlet collector 11 and its outlet collector 12 to a heating circuit which is not represented in the figures.

When hot water or another hot medium preferably but not necessarily flows in the direction of the arrows I and O in figures 1 and 2 through the pipes 7-8, the heat of this medium is given off to the air situated between the lamellas 9 via the pipes 7-8 and the lamellas 9, as a result of which said air is heated and the heated air will rise and leave the radiator 1 via the grid 6.

Thus is created a natural air flow in the room to be heated, in the sense of the arrows C in figure 1, which will heat the room according to the known principle of natural convection.

If the room to be heated is initially cold, its warming up can be speeded up considerably by activating the fans 15.

In this case is created a forced air circulation in the same sense as that according to the arrows C in the case of natural convection.

Thanks to the forced air circulation, the heat of the radiator 1 is distributed much faster in the room to be heated, such that the heating capacity of the radiator 1 concerned increases.

Once the room has been sufficiently heated, the fans 15 can be switched off, as a result of which the radiator 1 automatically switches back to natural convection and the radiator 1 will further operate noiselessly, or the fans can be driven at a lower rotational speed.

Thanks to the natural convection is created a pleasant temperature climate in the room, whereby it is practically equally warm everywhere in the heated room.

Thanks to the above-described combination of one or several fans 15 and of the specific shape and dimensions of the heat exchanger 2, the presence of the fans 15 has no or practically no negative influence on the natural convection of the radiator 1.

This means that the heating capacity of the radiator 1, whether it is either or not equipped with fans 15, is practically the same, as opposed to the known radiators where the presence of fans and the construction of the heat exchangers considerably diminishes the heating capacity of the radiator in the case of natural convection.

Figure 5 represents a variant of a fan 15 whose supports 21 are equipped with fixing means 22 in the shape of clamps or the like with which the fans 15 can be clamped on the pipes 7-8.

Although axial fans 15 have been applied in the figures, it is not excluded to use any other possible type of fan instead, for example centrifugal fans or transverse current fans, which draw in air through the heat exchanger 2 when in use.

It is clear that the heat exchanger 2 must not necessarily be provided with two U-shaped bent pipes 7-8, but that such a heat exchanger 2 in its simplest form can for example also be embodied in the shape of a single straight pipe onto which are provided lamellas at a distance from each other and which protrudes with its far ends on either side of the housing of the radiator 1 and is connected to a heating circuit with these far ends.

It is not excluded for more than two pipes 7-8 to be applied, which results in a higher capacity, both in the case of natural and forced convection, and for the inlet and outlet collectors 11-12 to be provided inside the casing, which makes the radiator concerned more aesthetic.

It is clear that, although a radiator has been described above which is applied in a heating installation, it is not excluded for such an improved radiator to be applied in a cooling circuit, where a cooling fluid flows through the radiator.

Although the lamellas 9 in the figures are provided parallel to each other and at mutually equal distances on the pipes 7-8, it is also possible to apply lamellas at different distances from each other and which are not necessarily directed parallel to each other.

The present invention is by no means limited to the above-described embodiment given as an example and represented in the accompanying drawings; on the contrary, such an improved radiator according to the invention can be made in all sorts of shapes and dimensions while still remaining within the scope of the invention.

## Claims

1. Improved radiator of the type which consists of a heat exchanger (2) provided in an open housing (3) and which mainly consists of one or several pipes (7-8) onto which one or several series of lamellas (9) are provided at mutual distances (A) from each other, **characterised in that** the distance (A) between the lamellas (9) amounts to at least three millimetres, and **in that** at least one fan (15) is provided above the heat exchanger (2), which fan (15) draws in air through the heat exchanger (2).

2. Improved radiator according to claim 1, **characterised in that** the fan (15) is of the axial type.

3. Improved radiator according to claim 1, **characterised in that** the fan (15) is of the centrifugal type or of the transverse current type.

4. Improved radiator according to claim 1, **characterised in that** the fan (15) is provided with supports (21) resting between the lamellas (9) on the above-mentioned pipe or pipes (7-8).

5. Improved radiator according to claim 4, **characterised in that** the above-mentioned supports (21) are provided with fixing means (22) with which they can be clamped on the pipes (7-8).

6. Improved radiator according to claim 1, **characterised in that** it is built in a modular manner and that, depending on the required dynamic capacity of the radiator (1), several fans (15) are provided next to each other, above the heat exchanger (2).

7. Improved radiator according to claim 1, **characterised in that** the thickness (B) of the lamellas (9) is included between fifteen one hundredths of a millimetre and one millimetre.

8. Improved radiator according to claim 1, **characterised in that** the lamellas (9) are made of copper, aluminium or steel.

9. Improved radiator according to claim 1, **characterised in that** the lamellas (9) have a corrugated shape.

10. Improved radiator according to claim 1, **characterised in that** the above-mentioned pipe or pipes (7-8) are made of copper, aluminium or steel.
